# EUROPEAN PATENT APPLICATION

(11) **EP 4 699 906 A1**
(43) Date of publication of application: **25.02.2026**
(21) Application number: 24791840.2
(22) Date of filing: 29.03.2024
(51) Int. Cl.: B62D 25/08

(54) **VEHICLE**

(30) Priority: 18.04.2023 CN 202310439713
(71) Applicant: BYD Company Limited, Shenzhen, Guangdong 518118 (CN)
(72) Inventor: QUAN, Yi, Shenzhen, Guangdong 518118 (CN); YI, Bengang, Shenzhen, Guangdong 518118 (CN); LI, Yan, Shenzhen, Guangdong 518118 (CN); XIE, Changchun, Shenzhen, Guangdong 518118 (CN); LIU, Tengyong, Shenzhen, Guangdong 518118 (CN)
(74) Representative: Mathys & Squire
(86) International application number: PCT/CN2024/084825
(87) International publication number: WO 2024/217254

(57) **Abstract**

A vehicle, comprising: a rear longitudinal beam assembly (410) and a strut assembly, wherein a mounting structure is provided on the rear longitudinal beam assembly (410); and a rear subframe (80), which is connected to the bottom of the rear longitudinal beam assembly (410) by means of the mounting structure, wherein one end of the strut assembly is connected to the rear longitudinal beam assembly (410), and the other end of the strut assembly is connected to an occupant compartment (20); and an end of the rear longitudinal beam assembly (410) is connected to the occupant compartment (20), such that a rearward collision force received by the vehicle can be dispersed, thereby improving the overall collision strength of the vehicle.

## Description

### CROSS-REFERENCE TO RELATED APPLICATIONS

This application claims priority to Chinese patent application No. 202310439713.7, filed by BYD Company Limited on April 18, 2023, and entitled "VEHICLE," which is incorporated herein by reference in its entirety.

### TECHNICAL FIELD

This application relates to the technical field of vehicle body structures, and specifically, to a vehicle.

### BACKGROUND

In conventional technologies, a body structure of a sports car is generally made of conventional metal materials. As the size of the body structure is significantly reduced, the structural size of the tail of a vehicle body is further reduced, which reduces crashworthiness of the body structure, and affects driving safety of the sports car.

### SUMMARY

This application is intended to solve one of the technical problems in a related technology at least to some extent.

To this end, this application provides a vehicle.

A vehicle provided in an embodiment of this application includes: a rear longitudinal beam assembly and a strut assembly, wherein the rear longitudinal beam assembly is provided with a mounting structure; and a rear subframe, wherein the rear subframe is connected to the bottom of the rear longitudinal beam assembly via the mounting structure, one end of the strut assembly is connected to the rear longitudinal beam assembly, and the other end of the strut assembly is connected to an occupant compartment; and an end of the rear longitudinal beam assembly is connected to the occupant compartment.

Therefore, the rear subframe, the rear longitudinal beam assembly, and the strut assembly can disperse a rear impact force acting on the vehicle, thereby improving overall crashworthiness of the vehicle.

Additional aspects and advantages of this application are set forth in part in the following description, and in part become apparent from the following description, or may be learned through the practice of this application.

### BRIEF DESCRIPTION OF DRAWINGS

FIG. 1 is a side view of a vehicle according to an embodiment of this application;
FIG. 2 is a first perspective view of a vehicle according to an embodiment of this application;
FIG. 3 is a partial perspective view of a vehicle according to an embodiment of this application;
FIG. 4 is a partial perspective view of a single side of a vehicle according to an embodiment of this application;
FIG. 5 is a second perspective view of a vehicle according to an embodiment of this application;
FIG. 6 is a side view of a vehicle according to an embodiment of this application;
FIG. 7 is a third perspective view of a vehicle according to an embodiment of this application;
FIG. 8 is a sectional view of a plane A-A in FIG. 7; and
FIG. 9 is a fourth perspective view of a vehicle according to an embodiment of this application.

### DESCRIPTION OF EMBODIMENTS

Embodiments of this application are described in detail below, examples of which are shown in the accompanying drawings, wherein same or similar reference numerals throughout represent same or similar elements or elements having same or similar functions. The embodiments described below with reference to the accompanying drawings are exemplary and are intended to explain this application, and shall not be construed as a limitation on this application.

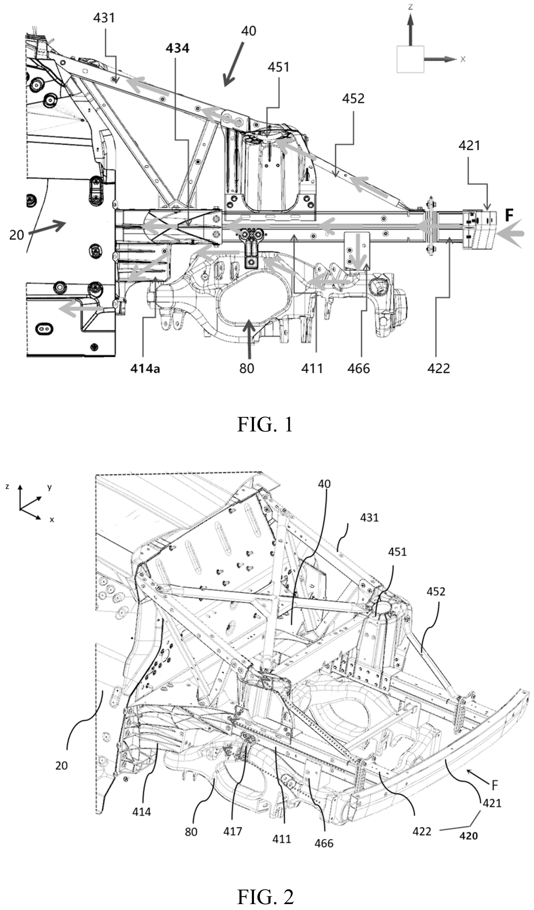

With reference to FIG. 1 and FIG. 2, an embodiment of this application provides a vehicle. The vehicle is a two-door sports car. The vehicle includes: a rear longitudinal beam assembly 410 and a strut assembly, wherein the rear longitudinal beam assembly 410 is provided with a mounting structure; and a rear subframe 80, wherein the rear subframe 80 is connected to the bottom of the rear longitudinal beam assembly 410 via the mounting structure, one end of the strut assembly is connected to the rear longitudinal beam assembly 410, and the other end of the strut assembly is connected to an occupant compartment 20; and one end of the rear longitudinal beam assembly 410 is connected to the occupant compartment 20.

The vehicle has a length direction, a width direction, and a height direction. The length direction of the vehicle may be an X direction in the figures, the width direction of the vehicle may be a Y direction in the figures, and the height direction of the vehicle may be a Z direction in the figures.

In a left-right symmetrical vehicle, the rear subframe 80, the rear longitudinal beam assembly 410, and the strut assembly form three force transmission paths in a single-sided structure of the vehicle, wherein the rear subframe 80 may transmit a force from rear tires when a lower portion bears an impact, to implement force transmission of a lower-layer force transmission structure; the rear longitudinal beam assembly 410 in a middle layer may cushion an impact force directly transmitted to the occupant compartment 20; and the strut assembly in an upper layer may also disperse the impact force transmitted to the occupant compartment 20.

The upper, middle, and lower force transmission paths of the vehicle enable impact energy generated when a rear portion of the vehicle bears an impact to be dispersedly transmitted to the occupant compartment, thereby avoiding failure of the occupant compartment caused by excessive local loading, improving impact resistance of the vehicle, and ensuring safety of occupants in the occupant compartment.

The vehicle provided in the embodiment of this application includes the rear longitudinal beam assembly 410 and the strut assembly, wherein the rear longitudinal beam assembly 410 is provided with the mounting structure; and the rear subframe 80, wherein the rear subframe 80 is connected to the bottom of the rear longitudinal beam assembly via the mounting structure, one end of the strut assembly is connected to the rear longitudinal beam assembly, and the other end of the strut assembly is connected to the occupant compartment. The rear subframe 80, the rear longitudinal beam assembly 410, and the strut assembly can disperse a rear impact force acting on the vehicle, thereby improving the overall crashworthiness of the vehicle.

In addition, the rear subframe 80 may provide mounting points for a rear motor and a rear subframe swing arm. The rear subframe 80 is integrally cast, such that the rear subframe 80 may be formed into an irregular subframe structure. Strength of the mounting point for the rear motor and the mounting point for the rear subframe swing arm can be ensured, and stiffness of the rear subframe 80 can be ensured within the constraints of an irregular structure design space, such that a structural mechanical performance and dimensional accuracy of the rear subframe 80 are improved, and the crashworthiness of the vehicle is enhanced.

The rear subframe 80 is connected to the bottom of the rear longitudinal beam assembly 410 via the mounting structure to facilitate mounting and disassembly of the rear subframe 80. Independent molding of the rear subframe 80 may take into account the adjustment of different motor assemblies, and different rear subframes may be matched while a frame structure at an upper portion of the vehicle remains unchanged.

The rear subframe 80 is integrally cast and connected to the bottom of the rear longitudinal beam assembly 410 via the mounting structure. The rear subframe 80 is integrally cast, which can ensure the strength of the mounting point on the rear subframe 80, such that the structural mechanical performance and dimensional accuracy of the rear subframe 80 are enhanced, and the crashworthiness of the vehicle is improved.

The foregoing rear longitudinal beam assembly 410 and the rear subframe 80 illustrate a left rear longitudinal beam assembly and a left rear subframe on a left side of the vehicle. Due to left-right symmetry of the body structure, a right side of the body structure is provided with a right rear longitudinal beam assembly and a right rear subframe that are symmetrical to the left rear longitudinal beam assembly and the left rear subframe. Furthermore, on the basis of the symmetry of the vehicle shown in the accompanying drawings of this application, components whose lefthand and right-hand versions are not differentiated in this specification but have left-right symmetrical structures still fall within the scope of protection of this application.

With reference to FIG. 2, the vehicle includes a rear wheel housing 451. The strut assembly includes a rear wheel housing rear strut 452 and a rear wheel housing front strut I 431. The rear wheel housing 451 is connected to the rear longitudinal beam assembly 410, and the rear wheel housing 451 is connected to the rear longitudinal beam assembly 410 via the rear wheel housing rear strut 452. The rear wheel housing 451 is connected to the occupant compartment 20 via the rear wheel housing front strut I 431.

In the length direction of the vehicle, the rear subframe 80 constitutes a lower-layer force transmission structure of the vehicle. The rear longitudinal beam assembly 410 constitutes a middle-layer force transmission structure of the vehicle. The rear wheel housing rear strut 452, the rear wheel housing front strut I 431, and the rear wheel housing 451 constitute an upper-layer force transmission structure of the vehicle.

In a left-right symmetrical vehicle, three force transmission paths are employed in a single-sided structure of the vehicle, wherein the rear subframe 80 may transmit a force transmitted from rear tires when a lower portion bears an impact, to implement force transmission of the lower-layer force transmission structure. The middle-layer force transmission structure transmits an impact force to the rear longitudinal beam 411 via a rear bumper beam 421 and a rear energy absorption box 422 in the rear longitudinal beam assembly 410, and then transmitted to the occupant compartment 20 via the rear longitudinal beam joint 414. The upper-layer force transmission structure transmits an impact force to the rear wheel housing 451 via the rear wheel housing rear strut 452, and then transmitted to the occupant compartment 20 via the rear wheel housing front support beam I 431.

The upper, middle, and lower force transmission paths of the vehicle enable impact energy generated when a rear portion of the vehicle bears an impact to be dispersedly transmitted to the occupant compartment, thereby avoiding failure of the occupant compartment caused by an excessive local loading, improving impact resistance of the vehicle, and ensuring safety of occupants in the occupant compartment.

The rear longitudinal beam assembly 410 is offset from at least part of the strut assembly in the height direction of the vehicle.

With reference to FIG. 1, in the height direction of the vehicle, the strut assembly is higher than the rear longitudinal beam assembly 410, such that when a middle portion of the vehicle bears an impact from behind, the rear longitudinal beam assembly 410 can cushion an impact force transmitted from the middle to the occupant compartment, and when an upper portion of the vehicle bears an impact from behind, the strut assembly can cushion an impact force transmitted from the upper portion to the occupant compartment. Furthermore, vertical cooperation between the rear longitudinal beam assembly 410 and the strut assembly can disperse an impact force when a rear portion of the vehicle bears an impact, ensuring structural integrity of the occupant compartment.

With reference to FIG. 2, the vehicle includes a rear bumper beam assembly 420. The rear bumper beam assembly 420 is connected to the occupant compartment 20 via the rear longitudinal beam assembly 410.

The rear longitudinal beam assembly 410 may include a rear longitudinal beam 411 and a rear longitudinal beam joint 414. The rear bumper beam assembly 420 may include a rear bumper beam 421 and a rear energy absorption box 422. The rear frame 40 of the vehicle body from the tail of the vehicle is first connected to the rear bumper beam 421 and the rear energy absorption box 422, and then forward connected to the lower portion of the occupant compartment 20 via the rear longitudinal beam 411 and the rear longitudinal beam joint 414, and furthermore, is aslant and upward connected to the upper portion of the occupant compartment 20 via the rear wheel housing rear strut 452, the rear wheel housing 451, and the rear wheel housing front support beam I 431, forming an upper framework of the vehicle, to disperse an impact force transmitted via the rear bumper beam assembly 420.

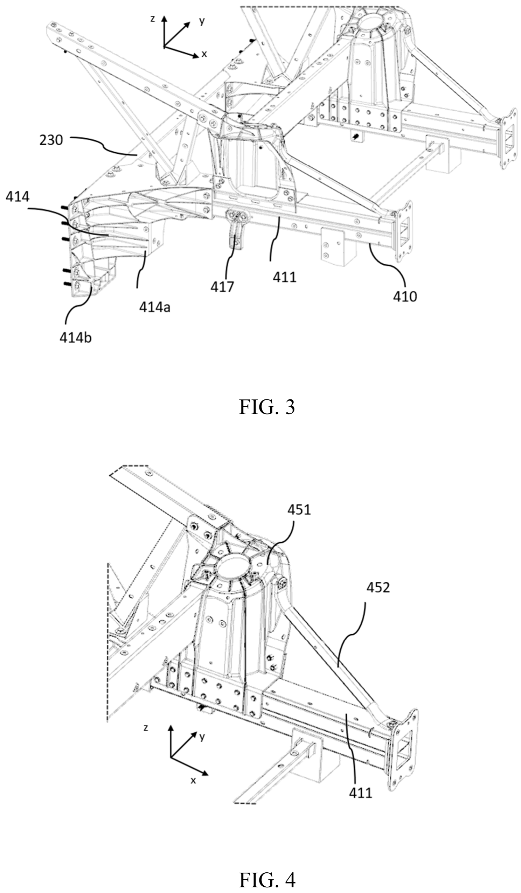

With reference to FIG. 2 and FIG. 3, the rear longitudinal beam assembly 410 includes a rear longitudinal beam 411 and a rear longitudinal beam joint 414. A rear end of the rear longitudinal beam 411 is connected to the rear bumper beam assembly 420. A front end of the rear longitudinal beam 411 is connected to the occupant compartment 20 via the rear longitudinal beam joint 414.

The mounting structure includes a subframe front mounting point 414a, a rear subframe connector 417, and a rear subframe rear mounting base 466. The subframe front mounting point 414a is disposed on the rear longitudinal beam joint 414. The rear subframe connector 417 is connected to the rear longitudinal beam 411 and is opposite to the rear wheel housing 451. The rear subframe rear mounting base 466 is connected to the rear end of the rear longitudinal beam 411.

In a case that the rear subframe 80 is integrally cast, the rear subframe 80 is connected to the vehicle via front, middle, and rear mounting points formed by the subframe front mounting point 414a, the rear subframe connector 417, and the rear subframe rear mounting base 466. A front portion of the rear subframe 80 is mounted at the front mounting point 414a on the rear longitudinal beam joint 414. A middle portion of the rear subframe 80 is below the rear wheel housing 451, and is connected to the rear frame of the vehicle body via the rear subframe connector 417. A rear portion of the rear subframe 80 is connected to the rear subframe rear mounting base 466.

An upper portion of the rear longitudinal beam joint 414 is flush with an upper surface of the rear longitudinal beam 411. A lower portion of the rear longitudinal beam joint 414 provides the subframe front mounting point 414a and a battery pack rear mounting point 414b. As a result, the battery pack, the occupant compartment, and the rear subframe can be connected together via the rear longitudinal beam joint 414, which plays a role of mutual support and force transmission, such that stiffness of the vehicle is greatly improved.

With reference to FIG. 4, the rear wheel housing rear strut 452 is a round tube beam strut, and two ends of the rear wheel housing rear strut 452 are respectively formed into a first flat structure and a second flat structure. The rear wheel housing rear strut 452 is connected to a rear side of the rear wheel housing 451 via the first flat structure. The rear wheel housing rear strut 452 is connected to the rear end of the rear longitudinal beam 411 via the second flat structure.

The rear wheel housing rear strut 452 employs a round tube beam structure, and two ends of the rear wheel housing rear strut 452 are flattened and formed into the first flat structure and the second flat structure by an extrusion process, such that direct mounting can be achieved via mounting surfaces of the first flat structure and the second flat structure, thereby reducing connecting joints required at the two ends of the rear wheel housing rear strut 452.

With reference to FIG. 4, a front portion of the rear wheel housing rear strut 452 is mounted on a rear side of the rear wheel housing 451, and a rear side mounting point is located on a top surface of the rear wheel housing 451 and is close to a shock absorber mounting point. A rear portion of the rear wheel housing rear strut 452 is downwardly mounted on the rear end of the rear longitudinal beam 411, and mutual support between the rear longitudinal beam 411 and the rear wheel housing 451 is formed by the rear wheel housing rear strut 452, which reduces a risk of the rear longitudinal beam 411 flipping upward when being impact from behind.

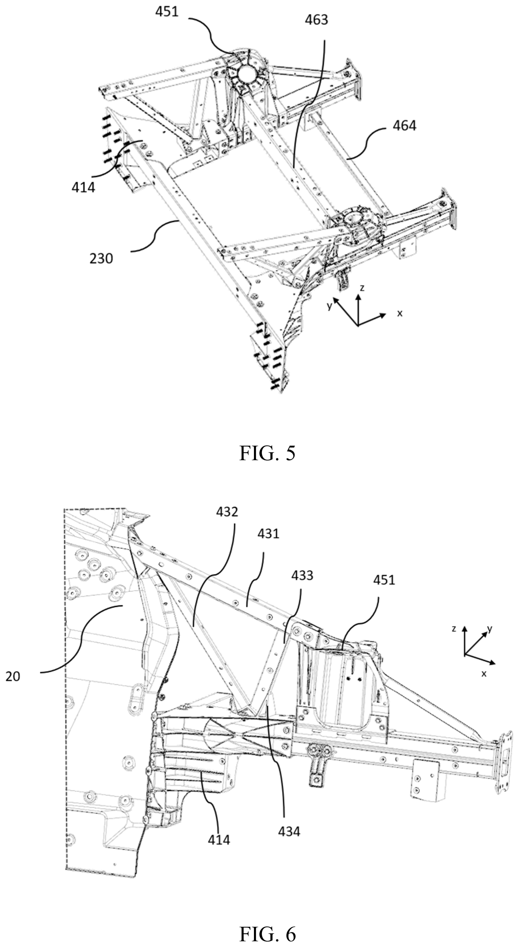

With reference to FIG. 5, the vehicle further includes a reinforcing beam 230. The rear longitudinal beam joint 414 includes a left rear longitudinal beam joint and a right rear longitudinal beam joint. The reinforcing beam 230 is connected between the left rear longitudinal beam joint and the right rear longitudinal beam joint and connected to the occupant compartment 20.

The reinforcing beam 230 may be connected to a rear side of the occupant compartment 20 and is flush with the rear longitudinal beam joint 414. Two ends of the reinforcing beam 230 are transversely inserted into the left rear longitudinal beam joint and the right rear longitudinal beam joint, to form a transverse reinforcing path through which the rear longitudinal beam transmits a force to the occupant compartment, thereby enhancing structural strength of the vehicle.

The vehicle further includes a rear frame rear beam 464. The rear subframe rear mounting base 466 includes a left rear subframe rear mounting base and a right rear subframe rear mounting base. The rear frame rear beam 464 is connected between the left rear subframe rear mounting base and the right rear subframe rear mounting base.

The rear frame rear beam 464 is designed at a transverse position between the left rear subframe rear mounting base and the right rear subframe rear mounting base, which not only can ensure lateral stability of the rear portion of the rear frame 40 and ensure lateral force transmission, but also can enhance lateral stiffness and inching stiffness of the rear subframe rear mounting base 466, thereby improving an NVH performance of the entire vehicle.

With reference to FIG. 5, the vehicle further includes a rear wheel housing stabilizer bar 463. The rear wheel housing 451 includes a left rear wheel housing and a right rear wheel housing. The rear wheel housing stabilizer bar 463 is connected between the left rear wheel housing and the right rear wheel housing.

The rear wheel housing stabilizer bar 463 is designed between the left rear wheel housing and the right rear wheel housing, and the cross-sectional dimension of the rear wheel housing stabilizer bar 463 in the Z direction is large. The height dimension of the rear wheel housing stabilizer bar 463 in the Z direction is 2/3 of a distance in the Z direction between the top surface of the rear wheel housing 451 and the rear longitudinal beam 411, such that the entire rear wheel housing 451 is effectively supported and the lateral stiffness of the rear wheel housing 451 is improved.

In this case, an upper surface of the rear wheel housing stabilizer bar 463 is flush with a top surface of the rear wheel housing 451 in the Z direction, such that a lateral load of the rear subframe 80 through a top surface mounting point of the rear wheel housing 451 can be effectively transmitted, thereby improving torsional stiffness of the vehicle.

With reference to FIG. 6, the vehicle further includes a rear wheel housing front strut II 432 and a rear wheel housing front strut III 433. Upper ends of the rear wheel housing front strut II 432 and the rear wheel housing front strut III 433 are respectively connected to two ends of the rear wheel housing front strut I 431, and lower ends of the rear wheel housing front strut II 432 and the rear wheel housing front strut III 433 are connected to the rear longitudinal beam joint 414 via a triangular frame mounting plate 434, such that the rear wheel housing front strut I 431, the rear wheel housing front strut II 432 and the rear wheel housing front strut III 433 form a triangular frame.

The rear wheel housing front support beam I 431, the rear wheel housing front support beam II 432 and the rear wheel housing front support beam III 433 form the stable triangular frame. A front portion of the triangular frame is connected to an upper joint of the occupant compartment. A lower portion of the triangular frame is mounted on a rear longitudinal beam joint 414 via the triangular frame mounting plate 434. A rear portion of the triangular frame is mounted on the rear wheel housing 451. The rear wheel housing front support beam II 432 and the rear wheel housing front support beam III 433 are respectively inclined forward and backward to lap joints of the occupant compartment and the rear wheel housing 451 by the triangular frame mounting plate 434, to strengthen stiffness of connection positions of the rear wheel housing front support beam II 432 and the rear wheel housing front support beam III 433.

In addition, the triangular frame integrates the rear wheel housing 451 with the occupant compartment and the rear longitudinal beam joint 414, thereby improving torsional stiffness of the rear wheel housing 451. In this case, the triangular frame further connects two force transmission paths that are the middle-layer load transmission and the upper-layer load transmission of the vehicle body, which ensures structural stability of a rear section of the rear frame when the vehicle bears an impact.

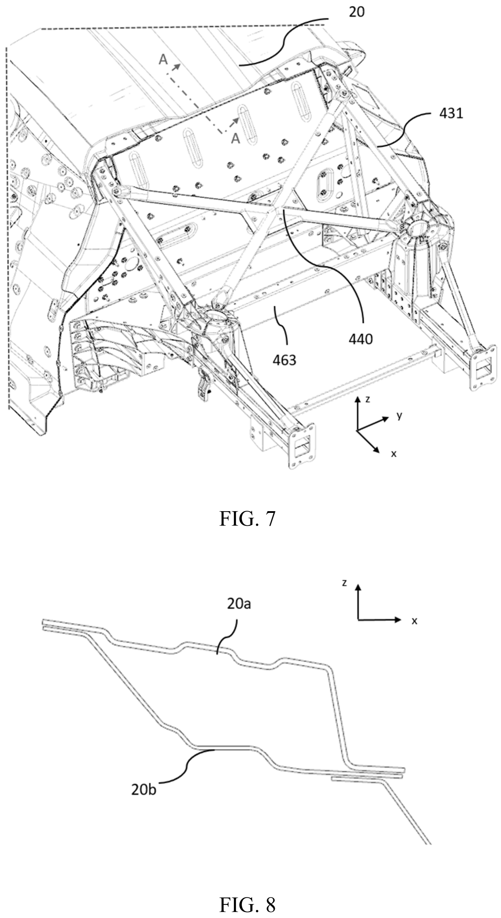

With reference to FIG. 7 and FIG. 8, the vehicle further includes an occupant compartment top frame rear beam. The rear wheel housing front strut I 431 includes a left rear wheel housing front strut I and a right rear wheel housing front strut I. The left rear wheel housing front strut I and the right rear wheel housing front strut I are oppositely connected to two ends of the occupant compartment top frame rear beam and the rear wheel housing stabilizer bar 463, such that the occupant compartment top frame rear beam, the left rear wheel housing front strut I, the right rear wheel housing front strut I, and the rear wheel housing stabilizer bar 463 form a rectangular stiffness ring.

With reference to FIG. 8, the occupant compartment top frame rear beam is enclosed by an upper cover plate 20a of the occupant compartment top frame rear beam and a lower cover plate 20b of the occupant compartment top frame rear beam, such that a closed cavity is formed in the occupant compartment top frame rear beam, and spans among the left rear wheel housing front strut I, the right rear wheel housing front strut I, and a joint of the occupant compartment. The occupant compartment top frame rear beam, the rear wheel housing front support beam I 431, and the rear wheel housing stabilizer bar 463 form the rectangular stiffness ring in the upper portion of the rear frame, and the closed rectangular stiffness ring reinforces the torsional stiffness of the vehicle.

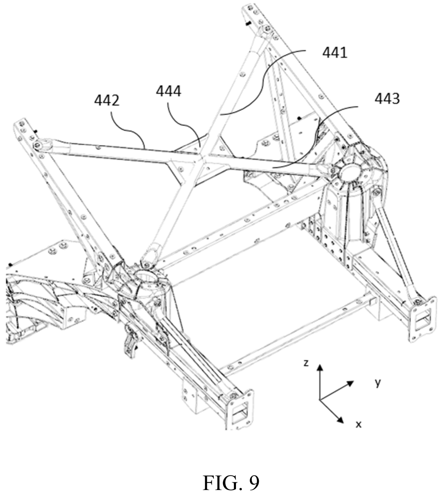

With reference to FIG. 9, the vehicle further includes a rear frame stabilizer bar assembly 440. The rear frame stabilizer bar assembly 440 includes a rear frame stabilizer bar I 441, a rear frame stabilizer bar II 442, and a rear frame stabilizer bar III 443. The rear frame stabilizer bar II 442 and the rear frame stabilizer bar III 443 are connected to two sides of the rear frame stabilizer bar I 441, such that the rear frame stabilizer bar assembly 440 is formed into an X-shaped structure.

Front ends of the X-shaped structure are respectively connected to the left rear wheel housing front strut I and the right rear wheel housing front strut I, and rear ends of the X-shaped structure are respectively connected to the left rear wheel housing and the right rear wheel housing.

The rear frame stabilizer bar assembly 440 provided in the embodiment of this application may improve maneuverability of the vehicle. The rear frame stabilizer bar assembly 440 is similar to a rectangular diagonal cross structure. An upper portion of the rear frame stabilizer bar assembly 440 is connected to the rear wheel housing front support beam I 431, and is close to the position of a lap joint of the rear wheel housing front support beam I 431 and the occupant compartment. A lower portion of the rear frame stabilizer bar assembly 440 is connected to the rear wheel housing 451, and is close to the position of a lap joint of the rear wheel housing front support beam I 431 and the rear wheel housing.

With reference to FIG. 9, the rear frame stabilizer bar assembly 440 includes a complete round tube beam rear frame stabilizer bar I 441, two short round tube rear frame stabilizer bars II 442 each with half a length of the complete round tube beam rear frame stabilizer bar, and the rear frame stabilizer bar III 443, and the middle of the rear frame stabilizer bar assembly is welded and combined via a rear frame stabilizer bar welding plate 444, to improve stability of the rear frame stabilizer bar assembly 440.

Thereafter, the overall stiffness of the vehicle is improved due to the structure of the rear frame stabilizer bar assembly 440. When the vehicle is in operation, a torsional load generated by a rear shock absorber can be transmitted to the vehicle body and the occupant compartment in time, and the vehicle body can move together with the rear subframe, reducing lateral swing of the rear frame 40 relative to the rear subframe 80, thereby improving maneuverability of the vehicle.

In this application, unless otherwise expressly specified and limited, the first feature being "on" or "under" the second feature may mean that the first and second features are in direct contact, or the first and second features are in indirect contact through an intermediate medium. Further, the first feature being "on", "above" and "on the upper side of" the second feature may mean that the first feature is directly above or obliquely above the second feature, or merely indicates that the first feature has a higher elevation than the second feature. The first feature being "under", "below" and "on the lower side of" the second feature may mean that the first feature is directly below or obliquely below the second feature, or merely indicates that the first feature has a lower elevation than the second feature.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily referring to the same embodiment or example. Moreover, specific features, structures, materials or characteristics described may be combined in any one or more embodiments or examples in a suitable manner. In addition, those skilled in the art may combine and associate different embodiments or examples and features of different embodiments or examples described in this specification without mutual contradiction.

Although embodiments of this application have been shown and described above, it will be understood that the foregoing embodiments are exemplary and are not to be construed as limitations on this application. Those of ordinary skill in the art may change, modify, replace and vary the foregoing embodiments within the scope of this application.

## Claims

1. A vehicle, comprising:
a rear longitudinal beam assembly and a strut assembly, wherein the rear longitudinal beam assembly is provided with a mounting structure; and
a rear subframe, wherein the rear subframe is connected to the bottom of the rear longitudinal beam assembly via the mounting structure, one end of the strut assembly is connected to the rear longitudinal beam assembly, and the other end of the strut assembly is connected to an occupant compartment; and
an end of the rear longitudinal beam assembly is connected to the occupant compartment.

2. The vehicle according to claim 1, further comprising a rear wheel housing, wherein the strut assembly comprises a rear wheel housing rear strut and a rear wheel housing front strut I, the rear wheel housing is connected to the rear longitudinal beam assembly, the rear wheel housing is connected to the rear longitudinal beam assembly via the rear wheel housing rear strut, and the rear wheel housing is connected to the occupant compartment via the rear wheel housing front strut I.

3. The vehicle according to claim 1 or 2, wherein the rear longitudinal beam assembly is offset from at least part of the strut assembly in a height direction of the vehicle.

4. The vehicle according to claim 2, further comprising a rear bumper beam assembly, wherein the rear bumper beam assembly is connected to the occupant compartment via the rear longitudinal beam assembly; the rear longitudinal beam assembly comprises a rear longitudinal beam and a rear longitudinal beam joint, a rear end of the rear longitudinal beam is connected to the rear bumper beam assembly, and a front end of the rear longitudinal beam is connected to the occupant compartment via the rear longitudinal beam joint; and
the mounting structure comprises a subframe front mounting point, a rear subframe connector, and a rear subframe rear mounting base, the subframe front mounting point is disposed on the rear longitudinal beam joint, the rear subframe connector is connected to the rear longitudinal beam and is opposite to the rear wheel housing, and the rear subframe rear mounting base is connected to the rear end of the rear longitudinal beam.

5. The vehicle according to claim 4, wherein the rear wheel housing rear strut is a round tube beam strut, and two ends of the rear wheel housing rear strut are respectively formed into a first flat structure and a second flat structure, the rear wheel housing rear strut is connected to a rear side of the rear wheel housing via the first flat structure, and the rear wheel housing rear strut is connected to the rear end of the rear longitudinal beam via the second flat structure.

6. The vehicle according to claim 4 or 5, further comprising a reinforcing beam, wherein the rear longitudinal beam joint comprises a left rear longitudinal beam joint and a right rear longitudinal beam joint, and the reinforcing beam is connected between the left rear longitudinal beam joint and the right rear longitudinal beam joint and connected to the occupant compartment.

7. The vehicle according to any one of claims 4 to 6, further comprising a rear frame rear beam, wherein the rear subframe rear mounting base comprises a left rear subframe rear mounting base and a right rear subframe rear mounting base, and the rear frame rear beam is connected between the left rear subframe rear mounting base and the right rear subframe rear mounting base.

8. The vehicle according to any one of claims 4 to 7, further comprising a rear wheel housing stabilizer bar, wherein the rear wheel housing comprises a left rear wheel housing and a right rear wheel housing, and the rear wheel housing stabilizer bar is connected between the left rear wheel housing and the right rear wheel housing.

9. The vehicle according to any one of claims 4 to 8, further comprising a rear wheel housing front strut II and a rear wheel housing front strut III, upper ends of the rear wheel housing front strut II and the rear wheel housing front strut III are respectively connected to two ends of the rear wheel housing front strut I, lower ends of the rear wheel housing front strut II and the rear wheel housing front strut III are connected to the rear longitudinal beam joint via a triangular frame mounting plate, such that the rear wheel housing front strut I, the rear wheel housing front strut II, and the rear wheel housing front strut III form a triangular frame.

10. The vehicle according to claim 8, further comprising an occupant compartment top frame rear beam, wherein the rear wheel housing front strut I comprises a left rear wheel housing front strut I and a right rear wheel housing front strut I, the left rear wheel housing front strut I and the right rear wheel housing front strut I are oppositely connected to two ends of the occupant compartment top frame rear beam and the rear wheel housing stabilizer bar, such that the occupant compartment top frame rear beam, the left rear wheel housing front strut I, the right rear wheel housing front strut I, and the rear wheel housing stabilizer bar form a rectangular stiffness ring.

11. The vehicle according to claim 10, further comprising a rear frame stabilizer bar assembly, wherein the rear frame stabilizer bar assembly comprises a rear frame stabilizer bar I, a rear frame stabilizer bar II, and a rear frame stabilizer bar III, the rear frame stabilizer bar II and the rear frame stabilizer bar III are connected to two sides of the rear frame stabilizer bar I to form an X-shaped structure; and
a front end of the X-shaped structure is separately connected to the left rear wheel housing front strut I and the right rear wheel housing front strut I, and a rear end of the X-shaped structure is separately connected to the left rear wheel housing and the right rear wheel housing.
